# FASCICULE DE BREVET EUROPEEN

(11) **EP 3 994 971 B1**
(45) Date de publication et mention de la délivrance du brevet: **07.06.2023**
(21) Numéro de dépôt: 21206541.1
(22) Date de dépôt: 04.11.2021
(51) Int. Cl.: A01C 23/00

(54) **DISPOSITIF D'ARTICULATION D'EPARPILLEUR DE LISIER**
GELENKVORRICHTUNG FÜR GÜLLEVERTEILER
HINGE DEVICE FOR MANURE SPREADER

(30) Priorité: 09.11.2020 BE 202005797
(43) Date de publication de la demande: 11.05.2022
(73) Titulaire: Ets JOSKIN S.A., 4630 Soumagne (BE)
(72) Inventeur: JOSKIN, Victor, 4633 MELEN (BE)
(74) Mandataire: AWA Benelux

(56) Documents cités:
- DE-C- 50 643
- IE-A1- 20 130 286
- US-A- 3 544 011
- US-A- 4 014 271

## Description

### Objet de l'invention

La présente invention se rapporte au domaine des épandeurs de lisier, c'est-à-dire de fumier liquide à semi-liquide, et autres matières assimilées.

La présente invention concerne plus précisément un dispositif permettant d'escamoter au moins partiellement un organe d'épandage par buse, dit « éparpilleur », disposé sur la vanne de sortie d'un engin d'épandage de lisier. Par engin d'épandage de lisier, on entend une remorque-citerne traînée, semi-portée ou portée, un chariot ou container servant de navette et portant un dispositif d'épandage à distance, par exemple par diffuseur d'épandage, dispositif ombilical, rampe d'épandage, ou tout autre dispositif similaire ou dérivé. Par escamoter l'organe d'épandage par buse, on entend replier cet élément contre ou sur l'engin d'épandage de lisier.

### Etat de la technique

Les organes d'épandage de lisier mettant en oeuvre une buse, éventuellement terminée par un cône et complétée d'un dispositif déflecteur, sont connus et très largement répandus à l'heure actuelle. Ceux-ci constituent le dispositif le plus économique pour la tâche d'épandage. De tels dispositifs sont par exemple décrits dans les documents GB813512 (Van Der Lely - éparpilleur aérien), US3528612 (Van Der Lely - double éparpilleur), GB2203924 (Baker - rampe double buse), GB2215405 (Nolan - éparpilleur exact), DE3513647 (Mößmer - éparpilleur oscillant). Ces dispositifs, passés de longue date dans l'espace public, n'ont que peu évolué en ce qui concerne l'organe d'épandage en lui-même.

Néanmoins, afin de faciliter le nettoyage de la buse d'épandage ou également afin de fixer le tuyau de remplissage de la citerne en lieu et place de la buse d'épandage sur le raccord de vanne arrière, des dispositifs ont été mis en oeuvre pour déconnecter ladite buse du système et ce, sans la désolidariser complètement de ce dernier afin d'éviter de devoir la déposer. Le document GB1190475 prévoit ainsi un dispositif de crampon autorisant un pivotement latéral de la buse sur un plan horizontal. Le document IE20130286 explique que pareil dispositif à crampons est sujet à usure pouvant déboucher sur la chute de la buse au sol, laquelle peut alors être perdue, volée ou causer un accident sur la voie publique. Ce même document IE20130286 propose en conséquence un dispositif d'articulation pivotant la buse verticalement au moyen d'un dispositif de levier.

Le document DE 50 643 (ou encore le document similaire DE 49 161) divulgue un très vieux dispositif d'épandage de lisier présentant un tuyau de sortie coudé muni d'un embout pivotant vers le haut au moyen d'une charnière à levier. La vanne ne se trouve pas sur le tuyau de sortie comme dans la technique actuelle, mais sous forme d'un clapet se trouvant à la sortie de l'éparpilleur. Ce dispositif ne semble pas pouvoir être étanche à la pression du lisier expulsé depuis une citerne et ne peut pas recevoir non plus un tuyau de remplissage ou transfert.

De nos jours, ces dispositifs d'écartement de la buse « sans dépose » se heurtent cependant au gabarit maximal des remorques, notamment tel qu'imposé par les réglementations routières nationales et plus récemment par le règlement UE 167/2013. Poussés par les contraintes de productivité et de rentabilité des exploitants agricoles, le gabarit des charrois d'épandage de lisier contemporains n'a cessé de croître au cours des 20 dernières années et se trouve à présent confiné aux dimensions maximales. Pour respecter les contraintes réglementaires de dimensions sur les plus grands charrois, la buse du dispositif d'épandage doit alors être détachée lors du transport et déposée, ce qui est contraire aux contraintes de productivité susdites. S'impose dès lors le défi de trouver un dispositif d'écartement de la buse d'épandage, sans devoir la désolidariser totalement du système afin d'éviter de la déposer, tout en s'insérant dans les dimensions maximales autorisées du charroi.

En l'occurrence, sachant que l'exploitant souhaitera une cuve de gabarit aussi grand que possible, la règle actuelle à respecter selon le règlement UE 167/2013 est que, sur la voie publique, la barre anti-encastrement arrière (plus communément appelée « pare-choc arrière ») ne peut en aucun cas, y compris après déformation suite à un choc, être située plus de 400 mm en amont de la limite postérieure de la remorque. En clair, sur un épandeur de lisier par exemple, la limite postérieure de la remorque est l'extrémité arrière de la buse d'épandage, laquelle ne peut donc jamais dépasser la barre anti-encastrement de plus de 400mm.

### Buts de l'invention

La présente invention a pour but de fournir un dispositif simple permettant, d'une part, d'écarter la buse d'épandage dans une positon durable sans la désolidariser complètement du système d'épandage afin de ne pas avoir à la déposer au sol ou à la stocker. Ceci doit permettre non seulement de la relever lors de son nettoyage ou de fixer un tuyau de remplissage à sa place, mais également de respecter les normes de dimensions de charroi autorisées lors du transport sur route.

La présente invention a également pour but de fournir une buse d'épandage simple à replacer dans sa position de travail, tout en garantissant une fixation fiable et étanche.

### Principaux éléments caractéristiques de l'invention

Un premier aspect de la présente invention se rapporte à un dispositif d'articulation pour organe d'épandage de lisier monté sur une bouche de sortie arrière pourvue d'une vanne d'un engin d'épandage, ledit organe comprenant un raccord à crampons mobiles et un éparpilleur, le raccord étant pourvu d'une potence s'étendant vers le haut et l'éparpilleur d'un bras de support, un axe de pivotement sensiblement horizontal reliant la potence et le bras de support de manière pivotante, pour permettre à l'éparpilleur d'être relevé librement d'une première position à une deuxième position, par écartement rotatif de l'éparpilleur dudit raccord, caractérisé en ce que la potence est pourvue de glissières s'étendant vers le haut dans lesquelles l'axe de pivotement peut être librement déplacé par translation de la deuxième position à une troisième position, par soulèvement de l'éparpilleur à distance du raccord.

Selon des modes d'exécution préférés de l'invention, le dispositif d'articulation comprend en outre au moins une des caractéristiques suivantes ou une combinaison adéquate de plusieurs d'entre elles :
- la potence est pourvue de glissières s'étendant vers le haut dans lesquelles l'axe de liaison peut être librement déplacé ;
- les glissières sont pourvues chacune d'un cran d'arrêt, lesdits crans d'arrêt se présentant sous forme d'une prolongation transversale de chaque glissière à une extrémité supérieure en s'étendant de manière descendante vers l'amont de la potence, lesdits crans d'arrêt permettant à l'axe de pivotement d'être placé au repos ;
- la potence et le bras de support sont respectivement pourvus d'orifices dans lesquels un axe de verrouillage de position peut être engagé ;
- le dispositif comprend un dispositif de puissance commandé à distance liant de manière pivotante d'une part le raccord ou la potence et d'autre part l'éparpilleur, pour soit écarter l'éparpilleur du raccord, soit reconnecter ceux-ci l'un à l'autre ;
- le bras de liaison est constitué d'un organe de puissance ;
- la potence est pourvue d'un second jeu de glissières dans lequel l'axe de fixation d'un organe de puissance peut être librement déplacé.

Un autre aspect de l'invention se rapporte à un engin d'épandage de lisier comprenant une bouche de sortie arrière pourvue d'une vanne et un organe d'épandage, muni d'un raccord à crampons mobiles, d'un éparpilleur et d'un dispositif d'articulation comme décrit ci-dessus.

Avantageusement, l'éparpilleur est un éparpilleur à buse munie d'une palette déflectrice, un éparpilleur exact, à double buse, aérien ou oscillant.

Encore un autre aspect de l'invention se rapporte à un procédé d'articulation, de relevage et d'ancrage en position de repos d'un dispositif d'articulation pour organe d'épandage comme décrit ci-dessus, caractérisé par :
- une étape de passage d'une première position à une deuxième position, ladite deuxième position étant relevée, par écartement de l'éparpilleur du raccord grâce à un mouvement de pivotement du bras de support vers le haut autour de l'axe de pivotement sensiblement horizontal liant la potence et le bras de support, et
- une étape de passage de la deuxième position, où se trouve déjà l'éparpilleur, à une troisième position, par soulèvement de l'éparpilleur à distance du raccord par translation de l'axe de pivotement vers le haut dans le premier jeu de glissières pratiquées dans la potence.

De préférence, l'éparpilleur soulevé en troisième position est calé en position de repos par glissement de l'axe de pivotement dans un cran d'arrêt s'étendant de manière sensiblement transversale à chacune des deux glissières.

Avantageusement encore, le procédé comprend une étape de passage de la deuxième ou troisième position à la première position, par rapprochement de l'éparpilleur du raccord selon un mouvement inverse de pivotement du bras de support vers le bas autour de l'axe de pivotement liant la potence et le bras de support, l'éparpilleur étant finalement pressé en première position sur le raccord de manière à assurer une bonne étanchéité.

De préférence, la première position est une position de travail d'épandage et la deuxième position est une position de transport, lorsque l'éparpilleur et son dispositif d'articulation sont montés sur un engin d'épandage.

Avantageusement, la troisième position est une position de remplissage via un tuyau relié à une source externe, lorsque l'éparpilleur et son dispositif d'articulation sont montés sur un engin d'épandage.

### Brève description des figures

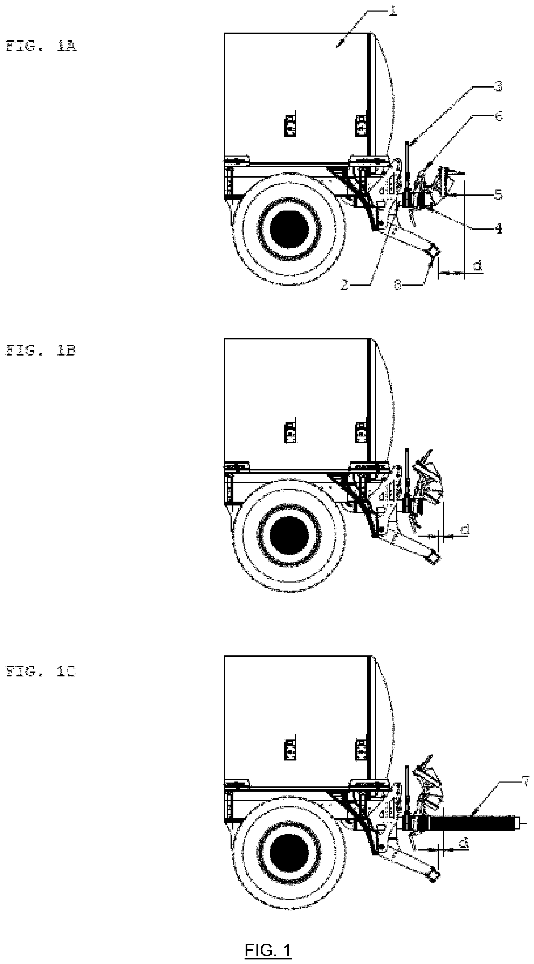

La Figure 1 montre une vue générale d'un dispositif d'articulation d'organe d'épandage selon la présente invention, monté à l'arrière d'une remorque-citerne d'épandage de lisier partiellement représentée ; dans cet exemple de réalisation, le dispositif est successivement représenté en position de travail (Figure 1a), de transport (Figure 1b) et de remplissage depuis une source externe (Figure 1c).

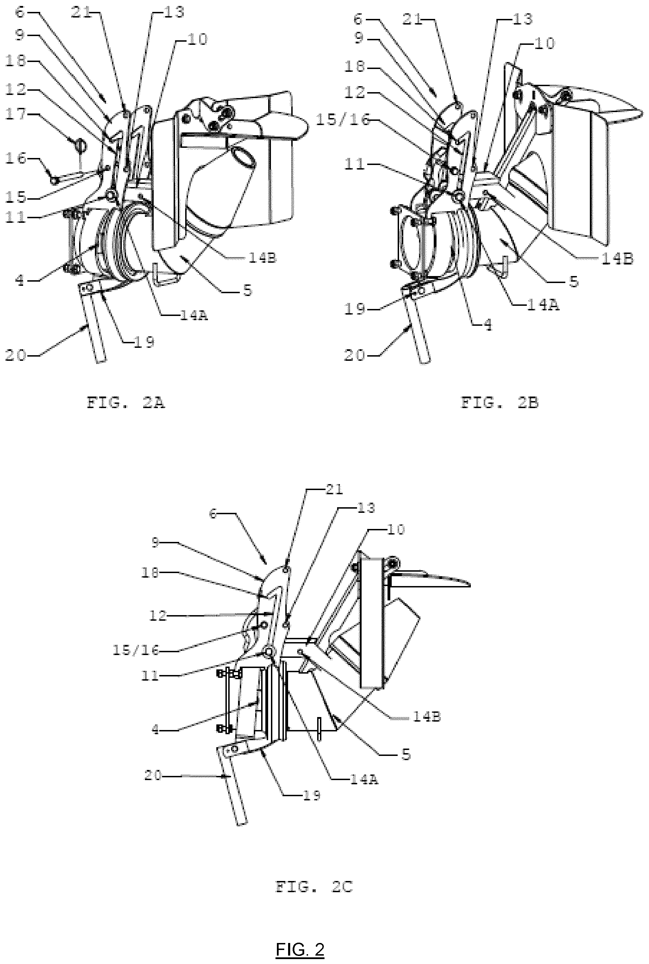

La Figure 2 montre une vue individuelle d'un dispositif d'articulation d'organe d'épandage selon l'invention en position de travail illustrée successivement en vue tri-dimensionnelle postérieure (Figure 2a), en vue tri-dimensionnelle antérieure (Figure 2b) et en vue bi-dimensionnelle de profil (Figure 2c).

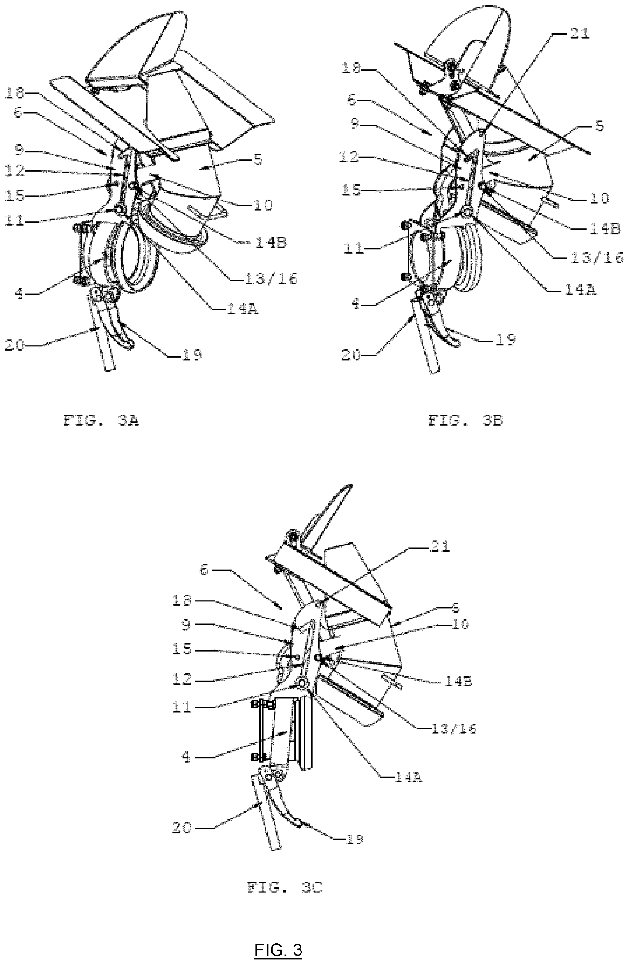

La Figure 3 montre une vue individuelle d'un dispositif d'articulation d'organe d'épandage selon l'invention en position de transport illustrée successivement en vue tri-dimensionnelle postérieure (Figure 3a), en vue tri-dimensionnelle antérieure (Figure 3b) et en vue bi-dimensionnelle de profil (Figure 3c).

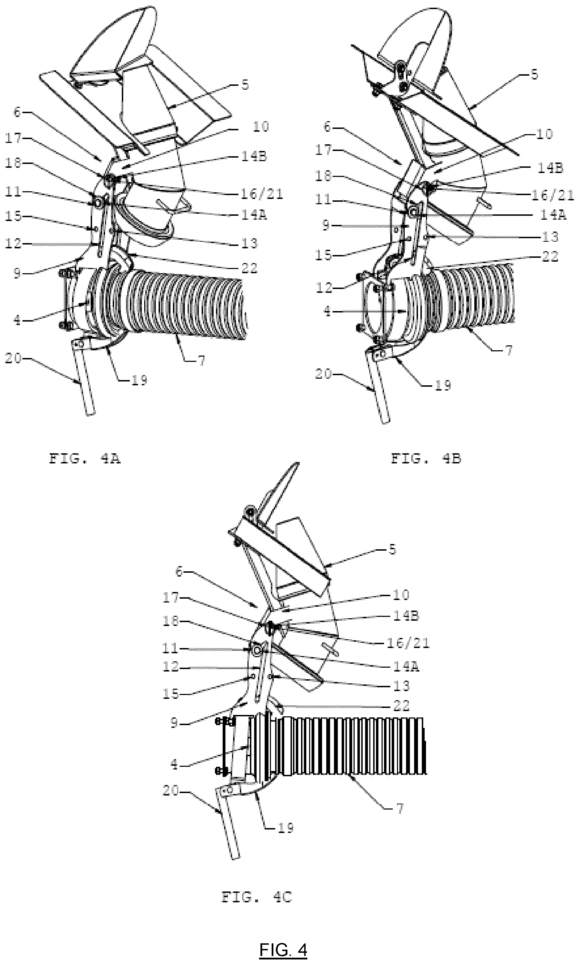

La Figure 4 montre une vue individuelle d'un dispositif d'articulation d'organe d'épandage selon l'invention en position de dégagement pour remplissage par vanne arrière, illustrée successivement en vue tri-dimensionnelle postérieure (Figure 4a), en vue tri-dimensionnelle antérieure (Figure 4b) et en vue bi-dimensionnelle de profil (Figure 4c).

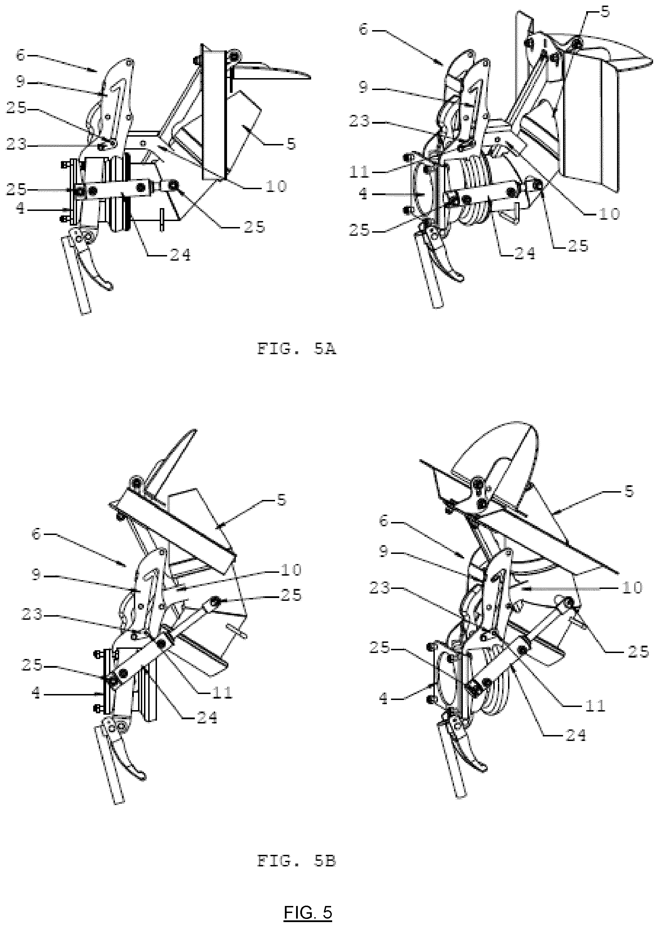

La Figure 5 montre une vue individuelle d'une exécution alternative d'un dispositif d'articulation d'organe d'épandage selon l'invention, tant en vue bi-dimensionnelle de profil qu'en vue tri-dimensionnelle antérieure, illustrée successivement en position de travail (Figure 5a) et en position de transport (Figure 5b).

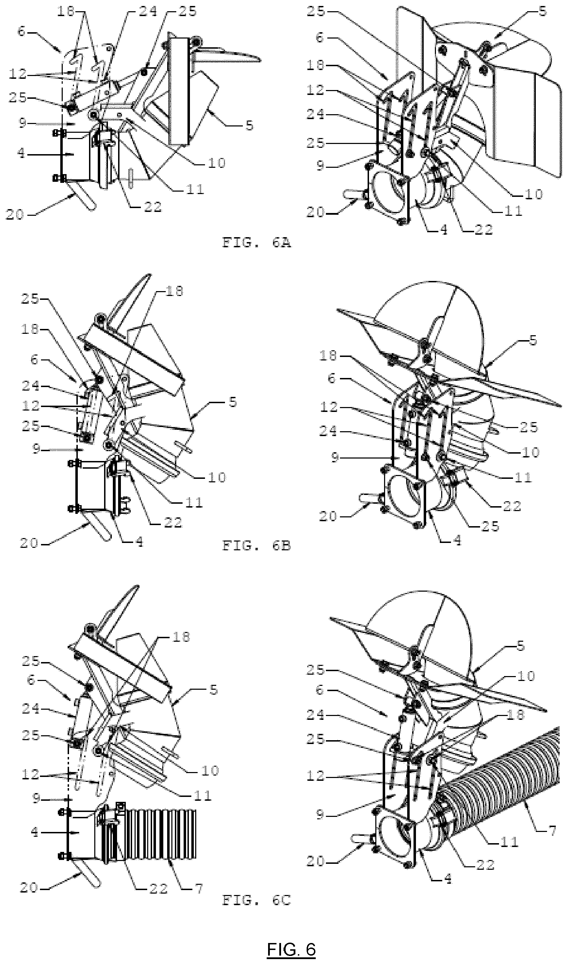

La Figure 6 montre une vue individuelle d'une exécution alternative d'un dispositif d'articulation d'organe d'épandage selon l'invention, tant en coupe verticale qu'en vue tri-dimensionnelle antérieure, illustrée successivement en position de travail (Figure 6a), en position de transport (Figure 6b) et en position de dégagement pour remplissage par vanne arrière (Figure 6c).

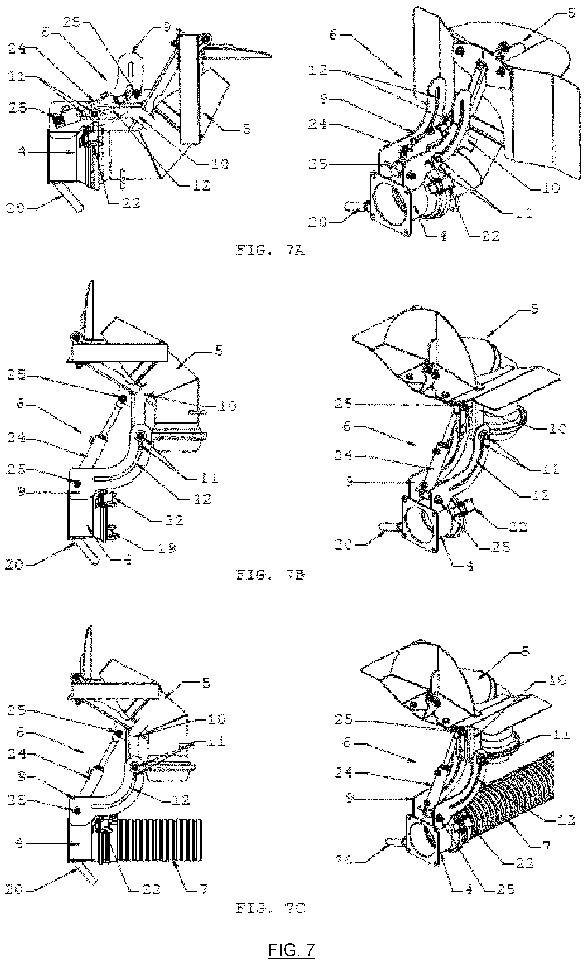

La Figure 7 montre une vue individuelle d'une exécution alternative d'un dispositif d'articulation d'organe d'épandage selon l'invention, tant en vue bi-dimensionnelle de profil qu'en vue tri-dimensionnelle antérieure, illustrée successivement en position de travail (Figure 7a) et en position de transport (Figure 7b) avec dégagement suffisant pour remplissage par vanne arrière (Figure 7c).

L'invention est explicitée à la suite au moyen d'une description non limitative de certains éléments de détail.

On notera que, suivant convention communément admise en mécanisation agricole et fixant l'avant d'un charroi agricole du côté de son sens de marche avant, l'expression « vers l'amont » utilisée dans la présente description désigne « vers l'engin d'épandage » alors que l'expression « vers l'aval » signifierait alors « en s'éloignant de l'engin d'épandage ». De manière similaire, le côté « antérieur » d'un élément est celui qui est le plus proche de l'engin d'épandage, alors que le côté « postérieur » désigne celui qui est le plus éloigné de l'engin d'épandage.

### Description de formes d'exécution préférées de l'invention

La présente invention concerne un dispositif d'articulation 6 permettant de déplacer un éparpilleur de lisier 5 entre au moins deux, et de préférence trois positions différentes, sans devoir le détacher de l'épandeur et le déposer au sol ou le stocker. Les trois positions, explicitées en détail ci-dessous, sont respectivement la position de travail (première position - Figure 1A), la position de transport (deuxième position - Figure 1B) et la position de remplissage (troisième position - Figure 1C), les deux premières étant les positions minimales recherchées.

En pratique, beaucoup de tonneaux à lisier sont pourvus d'une vanne latérale de remplissage, d'où la position supérieure n'est pas primordiale. L'élément essentiel est le pivotement vertical (et non plus horizontal) de l'éparpilleur 5. Les glissières n'y apportent qu'une amélioration en l'absence de vanne latérale.

Le dispositif d'articulation 6 de la présente invention est illustré sur les différentes figures. Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions. De même, le design structurel des composants suggéré dans les illustrations n'est nullement caractéristique de l'invention.

Le dispositif d'articulation 6 d'éparpilleur 5 de lisier selon l'invention est illustré de manière générale sur la Figure 1, monté à l'arrière d'une remorque-citerne 1 de transport et d'épandage de lisier (seulement partiellement représentée). Il est monté sur une bouche de sortie arrière 2 pourvue d'une vanne 3 et d'un raccord à crampons 4, auquel est accroché un éparpilleur 5 de lisier quelconque.

Tel qu'illustré sur les Figures 2 à 4, le dispositif d'articulation 6 de la présente invention est placé entre le raccord 4 à crampons mobiles 19, 22 et l'éparpilleur 5 de lisier à palette déflectrice ou autre dispositif d'éparpillement. Le dispositif d'articulation 6 lui-même est essentiellement constitué :
- d'une potence 9 fixée sur le dessus du raccord 4 à crampons, s'étendant vers le haut et pourvue d'au moins un jeu d'(au moins deux) orifices de liaison 12 transversaux (ou d'un alésage remplissant le même rôle) permettant l'engagement d'un axe de pivotement 11 ;
- d'un bras de support 10 fixé à l'une de ses extrémités sur l'éparpilleur 5, préférablement sur le côté supérieur de l'éparpilleur 5, et étant pourvu à l'autre de ses extrémités d'un alésage transversal antérieur 14A ;
- d'un axe de pivotement 11 liant la potence 9 et le bras de support 10 de l'éparpilleur 5 par insertion à la fois dans le jeu d'orifices de liaison 12 de la potence 9 et dans l'alésage transversal antérieur 14A du bras de support 10.

Dans un mode d'exécution préférentiel, le jeu d'orifices de liaison de la potence 9 est substitué par un jeu de (deux) glissières 12 s'étendant vers le haut le long de la potence 9. De cette manière, l'axe de pivotement 11 est engagé dans les deux glissières 12 s'étendant vers le haut, de sorte à pouvoir y être déplacé librement.

Grâce à ces différents éléments, l'éparpilleur 5 de lisier peut être déplacé entre les trois positions différentes précitées, par pivotement du bras de support 10 autour de l'axe de pivotement 11, et translation de ce dernier dans les glissières 12. Les mouvements de l'éparpilleur 5 sont expliqués en détail ci-dessous.

La fixation de la potence 9 sur la partie supérieure du raccord à crampons 4 et la fixation du bras de support 10 sur l'éparpilleur 5 est réalisée de manière quelconque, par exemple par soudage.

De manière avantageuse, des orifices de verrouillage respectivement inférieur 13 et supérieur 21 sont pratiqués dans la potence 9 pour chaque position de relevage selon qu'il y en ait une ou plusieurs, et un alésage transversal postérieur 14B est réalisé en retrait dans la longueur du bras de support 10 de l'éparpilleur 5. L'éparpilleur 5 peut alors être bloqué en position relevée au moyen d'un axe de verrouillage séparé 16 qui sera enfiché à la fois dans les orifices de verrouillage 13 ou 21 de la potence 9 et dans l'alésage transversal postérieur 14B. De manière avantageuse également, l'axe de verrouillage 16 est muni à l'une de ses extrémités d'un orifice dans lequel, une fois l'axe de verrouillage 16 posé dans son logement, une goupille 17 ou tout autre moyen de blocage similaire est enfichée.

Dans un autre mode exécution avantageux, des orifices de repos 15 peuvent être pratiqués dans la potence 9 pour servir de logement de repos à l'axe de verrouillage 16. De cette manière, l'axe de verrouillage 16 peut y être logé, et y être bloqué par une goupille 17 afin de ne pas l'égarer pendant le travail d'épandage.

Tel que représenté sur la Figure 1A, l'éparpilleur 5 est en position de travail, accroché de manière étanche au raccord 4. En Figure 1b, l'éparpilleur 5 est en position de transport, après écartement de l'éparpilleur 5 par pivotement du bras de support 10 vers le haut, autour de l'axe de pivotement 11. En Figure 1c, l'éparpilleur 5 est en position de remplissage, c'est-à-dire laissant place à l'accrochage d'un tuyau de remplissage 7, après écartement de l'éparpilleur 5 par pivotement du bras de support 10 autour de l'axe de pivotement 11 puis par translation de celui-ci dans les glissières s'étendant vers le haut 12. Ces mouvements sont expliqués plus bas.

Conformément aux objectifs de l'invention ainsi qu'expliqué en section introductive, un des intérêts de l'invention est de réduire la distance d comprise entre l'extrémité de la barre anti-encastrement 8 (voir Figure 1A) et l'extrémité de l'éparpilleur 5 en deçà de la limite légale en position relevée de transport (Figure 1B) ou même de remplissage (Figure 1C).

La Figure 2 illustre un dispositif d'articulation selon l'invention en position de travail. L'éparpilleur 5 est fermement tenu en position de travail, en haut par la liaison de l'axe 11, en bas par un crampon mobile inférieur 19 du raccord 4 actionné par un levier 20. La position correcte de l'éparpilleur 5 est garantie en toutes circonstances par la seule position possible de l'axe de pivotement 11 dans les glissières 12. Lorsque l'éparpilleur 5 passe d'une position haute (position de transport ou de remplissage) vers une position basse (position de travail), l'éparpilleur 5 est rabattu par pivotement vers le bas. Grâce au dispositif de la présente invention, il se place automatiquement dans une position correcte grâce à la cinématique du dispositif, et est maintenu fixement sur le raccord 4 simplement en plaçant et serrant le crampon inférieur 19 du raccord, le côté supérieur étant, quant à lui, maintenu fixement par l'axe pivot 11. L'opérateur n'a ainsi pas à se soucier de vérifier ou corriger la position du crampon supérieur du raccord pour assurer une bonne étanchéité.

La Figure 3 illustre le même dispositif d'articulation selon l'invention, mais cette fois en position de transport. Pour parvenir à cette position depuis la position de travail illustrée sur les figures précédentes (Figures 2A-2C), le crampon mobile inférieur 19 a été descellé au moyen du levier 20, libérant ainsi l'éparpilleur 5. Ensuite, l'éparpilleur 5 est pivoté manuellement vers le haut autour de l'axe de pivotement 11, via le bras de support 10. Pour le maintenir en cette position relevée pour le transport, l'axe de verrouillage 16 est simultanément engagé dans les orifices de verrouillage inférieurs 13 de la potence 9 et dans l'alésage transversal postérieur 14B du bras de support 10, l'axe de verrouillage 16 étant lui-même bloqué au moyen d'une goupille 17.

La Figure 4 illustre le même dispositif d'articulation selon l'invention, mais cette fois en position relevée au maximum pour permettre le remplissage de la cuve via le raccord 4 au moyen d'un tuyau externe 7. Pour parvenir à cette position depuis la position de transport illustrée sur les figures précédentes (Figures 3A-3C), après avoir désengagé l'axe de verrouillage 16 des orifices de verrouillage inférieurs 13, l'éparpilleur 5 est soulevé manuellement jusqu'à ce que l'axe de pivotement 11 parvienne à butée supérieure des glissières 12. Il est ensuite déplacé vers l'amont, toujours manuellement, de sorte que l'axe de pivotement 11 se loge dans des crans d'arrêt 18 des glissières 12. En effet, dans une forme exécution avantageuse de l'invention, chacune des glissières 12 de la potence 9 est terminée du côté supérieur par un cran d'arrêt oblique 18, les crans d'arrêts 18 étant sous forme d'une prolongation transversale de chaque glissière 12 en s'étendant de manière descendante vers le côté antérieur afin d'y laisser reposer l'axe de pivotement 11 lorsque l'éparpilleur 5 est relevé en position haute maximale pour le remplissage par la vanne arrière.

Pour maintenir l'éparpilleur 5 en cette position relevée au maximum, l'axe de verrouillage 16 est engagé dans les orifices de verrouillage supérieurs 21 de la potence 9 et dans l'alésage transversal postérieur 14B du bras de support 10, l'axe de verrouillage 16 étant lui-même bloqué au moyen d'une goupille 17. Le tuyau de remplissage 7 peut alors être connecté au raccord 4, au moyen du crampon mobile supérieur 22 et du crampon mobile inférieur 19 actionné par le levier 20.

Dans un mode d'exécution alternatif avantageux, telle qu'illustrée aux Figures 5 à 7, le raccord 4 et l'éparpilleur 5 sont successivement écartés l'un de l'autre et reconnectés au moyen d'un dispositif de puissance quelconque commandé à distance 24, par exemple un vérin hydraulique, épargnant à l'utilisateur la corvée de devoir quitter son poste de commande pour effectuer l'opération manuelle de connexion/déconnexion chaque fois qu'il arrive sur le chantier à traiter et qu'il doit le quitter. Il s'agit d'un paramètre important dans le cadre de la recherche de la productivité ultime des travaux agricoles, rendue nécessaire par la pression constante exercée sur le prix des denrées alimentaires. Cette forme d'exécution alternative offre en outre l'avantage de maintenir l'éparpilleur 5 en position, épargnant ainsi l'opération de verrouillage, que ce soit celle de verrouillage en position de transport par insertion de l'axe de verrouillage 16 ou celle de verrouillage en position de travail par serrage des crampons du raccord.

La Figure 5 illustre un dispositif d'articulation 6 alternatif selon l'invention. Dans cet exemple, l'éparpilleur 5 est à la fois déplacé et maintenu en position, soit de travail (Figure 5A), soit de transport (Figure 5B), par un vérin hydraulique double effet 24, avantageusement commandé à distance depuis le poste de pilotage. Le vérin 24 est placé entre deux axes quelconques 25 fixés d'une manière quelconque d'un côté au raccord 4 et de l'autre côté à l'éparpilleur 5. L'axe de pivotement 11 est muni d'un dispositif quelconque 23 de blocage l'empêchant de s'élever pour éviter que l'éparpilleur 5 ne s'élève après avoir pivoté. Dans une exécution alternative non illustrée, le dispositif de blocage 23 pourrait être absent et la longueur du vérin 24 adaptée pour permettre le soulèvement de l'éparpilleur 5 et son maintien en position soulevée, en sorte que l'accès au raccord 4 soit libéré pour y fixer un tuyau de remplissage 7.

La Figure 6 illustre un autre dispositif d'articulation alternatif selon l'invention, successivement en position de travail (Figure 6a), en position de transport (Figure 6b) et en position de dégagement pour remplissage par vanne arrière (Figure 6c).

Dans cet exemple aussi, l'éparpilleur 5 est à la fois déplacé et maintenu en position, soit de travail (Figure 6a), soit de transport (Figure 6b), par un vérin hydraulique double effet 24, avantageusement commandé à distance depuis le poste de pilotage. Le vérin 24 est également placé entre deux axes quelconques 25, l'un fixé à l'éparpilleur 5, l'autre logé dans une seconde glissière 12 pratiquée dans la potence 9, également terminée dans sa partie haute par un cran d'arrêt 18 s'étendant en amont vers le bas. Pour le placer en position complètement relevée pour remplissage par le raccord 4 (Figure 6c), l'éparpilleur 5 est alors soulevé manuellement depuis la position de transport (Figure 6b) jusqu'à entraîner l'axe de pivotement 11 et l'axe de fixation 25 du vérin 24 à butée supérieure des glissières 12, avant de le déplacer vers l'amont en sorte que tant l'axe de pivotement 11 que l'axe de fixation 25 reposent dans les crans d'arrêt 18. La pression présente dans le vérin 24 suffit alors à maintenir l'éparpilleur 5 dans la position ainsi acquise.

Dans un mode d'exécution alternatif non illustré, le vérin 24 peut avantageusement remplacer le bras de support 10 et la potence 9 n'être alors pourvue que d'une seule glissière 12.

La Figure 7 illustre encore un autre dispositif d'articulation alternatif selon l'invention, successivement en position de travail (Figure 7a) et en position de transport (Figure 7b) avec dégagement suffisant pour remplissage par vanne arrière (Figure 7c). Dans cet exemple aussi, l'éparpilleur 5 est à la fois déplacé et maintenu en position, soit de travail (Figure 7a), soit de transport (Figure 7b), par un vérin hydraulique double effet 24, avantageusement commandé à distance depuis le poste de pilotage, cette fois fixé d'un côté à la potence 9, de l'autre à l'éparpilleur 5, chaque fois au moyen d'un axe quelconque 25. La potence 9 est ici d'un dessin différent, courbe mais s'étendant toujours vers le haut, avec des glissières 12 de forme courbe concordante, et l'axe de pivotement 11 est ici doublé pour permettre un déplacement aisé dans les glissières 12. Cette forme d'exécution ne prévoit pas de position de transport et de remplissage séparées : l'éparpilleur 5 est soit en position de travail (Figure 7a), soit en position haute maximale (Figure 7b), permettant alors à l'opérateur de placer un tuyau de remplissage 7 sur le raccord 4 au moyen des crampons mobiles supérieur 22 et inférieur 19, ce dernier étant verrouillé au moyen du levier 20.

Dans tous les exemples qui précèdent, le lecteur aura bien compris que les opérations inverses à celles décrites permettent de ramener l'éparpilleur 5 d'une position haute vers une position inférieure. De même, il va de soi que les organes de puissance utilisés dans ces exemples peuvent être remplacés par des organes d'un autre type (électrique, électronique, électromagnétique, etc.) sans que cela n'altère les caractéristiques du dispositif d'articulation.

Nonobstant le fait que la présente invention a été exposée au moyen d'une description détaillée dans laquelle différentes variantes d'exécution et différents aspects de l'invention ont été explicités, l'homme de l'art verra que la portée complète de l'invention n'est nullement limitée aux exemples présentés ici. L'invention a une portée qui est définie par les revendications principales ou dépendantes.

### Liste des symboles de référence

- 1: Remorque-citerne de transport et épandage de lisier
- 2: Sortie arrière
- 3: Vanne
- 4: Raccord à crampons
- 5: Dispositif d'éparpillement du lisier, dit « éparpilleur »
- 6: Dispositif d'articulation selon l'invention
- 7: Tuyau de remplissage
- 8: Barre anti-encastrement
- 9: Potence
- 10: Bras de support
- 11: Axe de liaison/pivotement
- 12: Glissière (ou jeu de deux orifices de liaison)
- 13: Orifice de verrouillage inférieur
- 14A: Alésage transversal antérieur
- 14B: Alésage transversal postérieur
- 15: Orifice de repos
- 16: Axe de verrouillage
- 17: Goupille
- 18: Cran d'arrêt
- 19: Crampon mobile inférieur
- 20: Levier
- 21: Orifice de verrouillage supérieur
- 22: Crampon mobile supérieur
- 23: Dispositif de blocage
- 24: Vérin hydraulique
- 25: Axe de fixation vérin

## Revendications

1. Dispositif d'articulation (6) pour organe d'épandage de lisier monté sur une bouche de sortie arrière (2) pourvue d'une vanne (3) d'un engin d'épandage, ledit organe comprenant un raccord (4) et un éparpilleur (5), le raccord (4) étant pourvu d'une potence (9) s'étendant vers le haut et l'éparpilleur (5) d'un bras de support (10), un axe de pivotement (11) sensiblement horizontal reliant la potence (9) et le bras de support (10) de manière pivotante, pour permettre à l'éparpilleur (5) d'être relevé librement d'une première position à une deuxième position, par écartement rotatif de l'éparpilleur (5) dudit raccord (4), **caractérisé en ce que** le raccord (4) est à crampons mobiles (19, 22) et **en ce que** la potence (9) est pourvue de glissières (12) s'étendant vers le haut dans lesquelles l'axe de pivotement (11) peut être librement déplacé par translation de la deuxième position à une troisième position, par soulèvement de l'éparpilleur (5) à distance du raccord (4).

2. Dispositif d'articulation (6) selon la revendication 1, **caractérisé en ce que** les glissières (12) sont pourvues chacune d'un cran d'arrêt (18), lesdits crans d'arrêts (18) se présentant sous forme d'une prolongation transversale de chaque glissière (12) à une extrémité supérieure en s'étendant de manière descendante vers l'amont de la potence (9), lesdits crans d'arrêt (18) permettant à l'axe de pivotement (11) d'être placé au repos.

3. Dispositif d'articulation (6) selon l'une quelconque des revendications précédentes, **caractérisé en ce que** la potence (9) et le bras de support (10) sont respectivement pourvus d'orifices (13, 21 ; 14B) dans lesquels un axe de verrouillage de position (16) peut être engagé.

4. Dispositif d'articulation (6) selon l'une quelconque des revendications précédentes, **caractérisé en ce qu'**il comprend un dispositif de puissance (24) commandé à distance liant de manière pivotante d'une part le raccord (4) ou la potence (9) et d'autre part l'éparpilleur (5), pour soit écarter l'éparpilleur (5) du raccord (4), soit reconnecter ceux-ci l'un à l'autre.

5. Dispositif d'articulation (6) selon l'une quelconque des revendications précédentes, **caractérisé en ce que** le bras de support (10) est constitué d'un organe de puissance (24).

6. Dispositif d'articulation (6) selon l'une quelconque des revendications précédentes, **caractérisé en ce que** la potence (9) est pourvue d'un second jeu de glissières (12) dans lequel l'axe de fixation (25) d'un organe de puissance (24) peut être librement déplacé.

7. Engin d'épandage de lisier comprenant une bouche de sortie arrière (2) pourvue d'une vanne (3) et un organe d'épandage, muni d'un raccord (4) à crampons mobiles (19, 22), d'un éparpilleur (5) et d'un dispositif d'articulation (6) selon l'une quelconque des revendications précédentes.

8. Engin d'épandage de lisier selon la revendication 7, **caractérisé en ce que** l'éparpilleur (5) est un éparpilleur à buse munie d'une palette déflectrice, un éparpilleur exact, à double buse, aérien ou oscillant.

9. Procédé d'articulation, de relevage et d'ancrage en position de repos d'un dispositif d'articulation (6) pour organe d'épandage selon l'une quelconque des revendications 1 à 6, **caractérisé par** :
- une étape de passage d'une première position à une deuxième position, ladite deuxième position étant relevée, par écartement de l'éparpilleur (5) du raccord (4) grâce à un mouvement de pivotement du bras de support (10) vers le haut autour de l'axe de pivotement (11) sensiblement horizontal (11) liant la potence (9) et le bras de support (10), et
- une étape de passage de la deuxième position, où se trouve déjà l'éparpilleur (5), à une troisième position, par soulèvement de l'éparpilleur (5) à distance du raccord (4) par translation de l'axe de pivotement (11) vers le haut dans le premier jeu de glissières (12) pratiquées dans la potence (9).

10. Procédé selon la revendication 9, **caractérisé en ce que** l'éparpilleur (5) soulevé en troisième position est calé en position de repos par glissement de l'axe de pivotement (11) dans un cran d'arrêt (18) s'étendant de manière sensiblement transversale à chacune des deux glissières (12).

11. Procédé selon l'une quelconque des revendications 9 et 10, **caractérisé par** une étape de passage de la deuxième ou troisième position à la première position, par rapprochement de l'éparpilleur (5) du raccord (4) selon un mouvement inverse de pivotement du bras de support (10) vers le bas autour de l'axe de pivotement (11) liant la potence (9) et le bras de support (10), l'éparpilleur (5) étant finalement pressé en première position sur le raccord (4) de manière à assurer une bonne étanchéité.

12. Procédé selon la revendication 9, **caractérisé en ce que** la première position est une position de travail d'épandage et la deuxième position est une position de transport, lorsque l'éparpilleur et son dispositif d'articulation sont montés sur un engin d'épandage.

13. Procédé selon la revendication 10, **caractérisé en ce que** la troisième position est une position de remplissage via un tuyau relié à une source externe, lorsque l'éparpilleur et son dispositif d'articulation sont montés sur un engin d'épandage.

## Patentansprüche

1. Gelenkvorrichtung (6) für Güllestreuglied, das auf einer hinteren Ausgangsöffnung (2) montiert ist, versehen mit einem Ventil (3) eines Streugeräts, wobei das Glied einen Anschluss (4) und einen Verteiler (5) umfasst, wobei der Anschluss (4) mit einem Träger (9), der sich nach oben erstreckt, und der Verteiler (5) mit einem Stützarm (10) versehen ist, wobei eine im Wesentlichen horizontale Schwenkachse (11) den Träger (9) und den Stützarm (10) auf schwenkende Weise verbindet, um zu ermöglichen, dass der Verteiler (5) frei aus einer ersten Position in eine zweite Position durch drehendes Entfernen des Verteilers (5) des Anschlusses (4) gehoben wird, **dadurch gekennzeichnet, dass** der Anschluss (4) mit beweglichen Klammern (19, 22) ist, und dadurch, dass der Träger (9) mit Gleitschienen (12) versehen ist, die sich nach oben erstrecken, in denen die Schwenkachse (11) frei durch Translation aus der zweiten Position in eine dritte Position durch Heben des Verteilers (5) in einen Abstand vom Anschluss (4) verschoben werden kann.

2. Gelenkvorrichtung (6) nach Anspruch 1, **dadurch gekennzeichnet, dass** die Gleitschienen (12) jeweils mit einer Arretierung (18) versehen sind, wobei die Arretierungen (18) die Form einer quer verlaufenden Verlängerung jeder Gleitschiene (12) an einem oberen Ende aufweisen, indem sie sich auf abfallende Weise hin zur vorgelagerten Seite des Trägers (9) erstrecken, wobei die Arretierungen (18) der Schwenkachse (11) ermöglichen, in Ruheposition gebracht zu werden.

3. Gelenkvorrichtung (6) nach einem der vorhergehenden Ansprüche, **dadurch gekennzeichnet, dass** der Träger (9) und der Stützarm (10) jeweils mit Öffnungen (13, 21; 14B) versehen sind, in die eine Positionsverriegelungsachse (16) eingegriffen werden kann.

4. Gelenkvorrichtung (6) nach einem der vorhergehenden Ansprüche, **dadurch gekennzeichnet, dass** sie eine Leistungsvorrichtung (24) umfasst, die fernbedient wird, die auf schwenkende Weise einerseits den Anschluss (4) oder den Träger (9) und andererseits den Verteiler (5) verbindet, um entweder den Verteiler (5) vom Anschluss (4) zu beabstanden oder dieselben erneut miteinander zu verbinden.

5. Gelenkvorrichtung (6) nach einem der vorhergehenden Ansprüche, **dadurch gekennzeichnet, dass** der Stützarm (10) aus einem Leistungsglied (24) besteht.

6. Gelenkvorrichtung (6) nach einem der vorhergehenden Ansprüche, **dadurch gekennzeichnet, dass** der Träger (9) mit einem zweiten Satz von Gleitschienen (12) versehen ist, in dem die Fixierungsachse (25) eines Leistungsglieds (24) frei verschoben werden kann.

7. Güllestreugerät, umfassend eine hintere Ausgangsöffnung (2), versehen mit einem Ventil (3), und ein Streuglied, ausgestattet mit einem Anschluss (4) mit beweglichen Klammern (19, 22), mit einem Verteiler (5) und mit einer Gelenkvorrichtung (6) nach einem der vorhergehenden Ansprüche.

8. Güllestreugerät nach Anspruch 7, **dadurch gekennzeichnet, dass** der Verteiler (5) ein Verteiler mit Düse ist, ausgestattet mit einer Ablenkplatte, einem exakten Verteiler, mit doppelter Düse, in der Luft oder schwingend.

9. Verfahren zum gelenkigen Verbinden, Heben und Verankern in Ruheposition einer Gelenkvorrichtung (6) für ein Streuglied nach einem der Ansprüche 1 bis 6, **gekennzeichnet durch**
- einen Schritt des Überleitens aus einer ersten Position in eine zweite Position, wobei die zweite Position durch Entfernen des Verteilers (5) des Anschlusses (4) dank einer Schwenkbewegung des Stützarms (10) nach oben um die im Wesentlichen horizontale Schwenkachse (11) gehoben wird, die den Träger (9) und den Stützarm (10) verbindet, und
- einen Schritt des Überleitens aus der zweiten Position, in der sich der Verteiler (5) bereits befindet, in eine dritte Position durch Heben des Verteilers (5) in einen Abstand vom Anschluss (4) durch Translation der Schwenkachse (11) nach oben in den ersten Satz von Gleitschienen (12), die im Träger (9) angebracht sind.

10. Verfahren nach Anspruch 9, **dadurch gekennzeichnet, dass** der Verteiler (5), gehoben in die dritte Position, durch Gleiten der Schwenkachse (11) in eine Arretierung (18) in die Ruheposition festgesetzt wird, wobei sich die Arretierung im Wesentlichen quer zu jeder der zwei Gleitschienen (12) erstreckt.

11. Verfahren nach einem der Ansprüche 9 und 10, **gekennzeichnet durch** einen Schritt des Überleitens aus der zweiten Position oder der dritten Position in die erste Position durch Annähern des Verteilers (5) an den Anschluss (4) gemäß einer umgekehrten Schwenkbewegung des Stützarms (10) nach unten um die Schwenkachse (11), die den Träger (9) und den Stützarm (10) verbindet, wobei der Verteiler (5) schließlich in die erste Position auf den Anschluss (4) gedrückt wird, um eine gute Dichtigkeit sicherzustellen.

12. Verfahren nach Anspruch 9, **dadurch gekennzeichnet, dass** die erste Position eine Streuarbeitsposition ist und die zweite Position eine Transportposition ist, wenn der Verteiler und seine Gelenkvorrichtung auf ein Streugerät montiert sind.

13. Verfahren nach Anspruch 10, **dadurch gekennzeichnet, dass** die dritte Position eine Füllposition mit Hilfe eines Schlauchs ist, der mit einer externen Quelle verbunden ist, wenn der Verteiler und seine Gelenkvorrichtung auf ein Streugerät montiert sind.

## Claims

1. A hinge device (6) for a manure spreader member mounted on a rear outlet mouth (2) provided with a valve (3) of a spreading vehicle, said member comprising a connector (4) and a spreader (5), the connector (4) being provided with a bracket (9) extending upward and the spreader (5) with a support arm (10), a substantially horizontal pivot pin (11) pivotably connecting the bracket (9) and the support arm (10), so as to allow the spreader (5) to be raised freely from a first position to a second position, by rotating separation of the spreader (5) from said connector (4), **characterized in that** the connector (4) has movable studs (19, 22) and **in that** the bracket (9) is provided with slideways (12) extending upward in which the pivot pin (11) can be freely moved by translation from the second position to a third position, by lifting the spreader (5) away from the connector (4).

2. The hinge device (6) according to claim 1, **characterized in that** the slideways (12) are each provided with a stop notch (18), said stop notches (18) assuming the form of a transverse extension of each slide (12) at an upper end while extending downward toward the upstream direction of the bracket (9), said stop notches (18) allowing the pivot pin (11) to be placed at rest.

3. The hinge device (6) according to any one of the preceding claims, **characterized in that** the bracket (9) and the support arm (10) are respectively provided with orifices (13, 21; 14B) in which a position locking pin (16) can be engaged.

4. The hinge device (6) according to any one of the preceding claims, **characterized in that** it comprises a remotely controlled power device (24) pivotably connecting the connector (4) or the bracket (9) on the one hand and the spreader (5) on the other hand, either to separate the spreader (5) from the connector (4), or to reconnect them to one another.

5. The hinge device (6) according to any one of the preceding claims, **characterized in that** the support arm (10) is made up of a power member (24).

6. The hinge device (6) according to any one of the preceding claims, **characterized in that** the bracket (9) is provided with a second set of slideways (12) in which the fixing pin (25) of a power member (24) can be freely moved.

7. A manure spreading vehicle comprising a rear outlet mouth (2) provided with a valve (3) and a spreading member, provided with a connector (4) with movable studs (19, 22), a spreader (5) and a hinge device (6) according to any one of the preceding claims.

8. The manure spreading vehicle according to claim 7, **characterized in that** the spreader (5) is a nozzle spreader provided with a deflector vane, an exact spreader, with dual nozzle, aerial or oscillating.

9. A method of articulating, lifting and anchoring in the rest position of a hinge device (6) for a spreading member according to any one of claims 1 to 6, **characterized by**:
- a step for going from a first position to a second position, said second position being lifted, by separating the spreader (5) from the connector (4) owing to an upward pivoting movement of the support arm (10) around the substantially horizontal (11) pivot pin (11) connecting the bracket (9) and the support arm (10), and
- a step for going from the second position, where the spreader (5) already is, to a third position, by raising the spreader (5) away from the connector (4) by upward translation of the pivot pin (11) in the first set of slideways (12) formed in the bracket (9).

10. The method according to claim 9, **characterized in that** the spreader (5) raised in the third position is wedged in the rest position by sliding the pivot pin (11) into a stop notch (18) extending substantially transversely to each of the two slideways (12).

11. The method according to any one of claims 9 and 10, **characterized by** a step for passage from the second or third position to the first position, by bringing the spreader (5) closer to the connector (4) following an inverse pivoting movement of the support arm (10) downward around the pivot pin (11) connecting the bracket (9) and the support arm (10), the spreader (5) ultimately being pressed into the first position on the connector (4) so as to ensure good tightness.

12. The method according to claim 9, **characterized in that** the first position is a working spreading position and the second position is a transport position, when the spreader and its hinge device are mounted on a spreading vehicle.

13. The method according to claim 10, **characterized in that** the third position is a filling position for filling via a pipe connected to an external source, when the spreader and its hinge device are mounted on a spreading vehicle.
